# EUROPEAN PATENT APPLICATION

(11) **EP 2 254 388 A1**
(43) Date of publication of application: **24.11.2010**
(21) Application number: 08720475.6
(22) Date of filing: 14.03.2008
(51) Int. Cl.: H04W 88/02, H04W 84/00

(54) **RELAY SYSTEM AND WIRELESS COMMUNICATION SYSTEM**

(71) Applicant: Panasonic Corporation, Kadoma-shi Osaka 571-8501 (JP)
(72) Inventor: KAWAUCHI, Ryoto c/o Panasonic Corporation, Osaka 540-6207 (JP); SOTOYAMA, Takayuki c/o Panasonic Corporation, Osaka 540-6207 (JP)
(74) Representative: Grünecker, Kinkeldey, Stockmair & Schwanhäusser Anwaltssozietät
(86) International application number: PCT/JP2008/000589
(87) International publication number: WO 2009/113129

(57) **Abstract**

A relay system capable of flexibly being constructed and a wireless communication system capable of more stable communication by means of the relay system. A mobile station (200) which is a master terminal constituting the relay system transmits a synchronized signal and mobile stations (300) which are slave terminals receive the synchronized signal. The mobile station (200) and the mobile stations (300) transmit data transmitted from a base station device (100) to a wireless LAN terminal (400) in mutual transmission timing on the basis of the synchronized signal. With this, the relay system can be flexibly constructed of a plurality of mobile stations, thus providing the increased possibility to avoid the state where communication cannot be performed because of the number of RF resources of a relay terminal and the usage state as before. As a result, the relay system allows a wireless communication system capable of more stable communication to be realized.

## Description

### Technical Field

The present invention relates to a relay system and wireless communication system.

### Background Art

In various places, studies are conducted for an adhoc network, which is an autonomous distributed wireless network configured with only wireless terminals allowing connection via radio (personal computers, PDAs, mobile phones and so on) without requiring a base station or an access point. An adhoc network can be easily configured even in places without an infrastructure including an access point.

Further, MIMO (Multiple Input Multiple Output) communication is a technique for realizing high speed wireless communication. MIMO is a spatial multiplexing transmission technique using a plurality of antennas on the transmission and reception sides and transmitting a plurality of data from a plurality of antennas in the same frequency, at the same time. With MIMO, channels that can be transmitted and received at the same time increase, so that it is possible to increase the amount of communication per unit time and improve the transmission speed.

For example, Patent Document 1 discloses a wireless communication system where a MIMO communication scheme is applied to the above adhoc network. This wireless communication system utilizes excess antenna resources of MIMO transmitters and receivers effectively and realizes multi-hop network of a MIMO communication scheme.

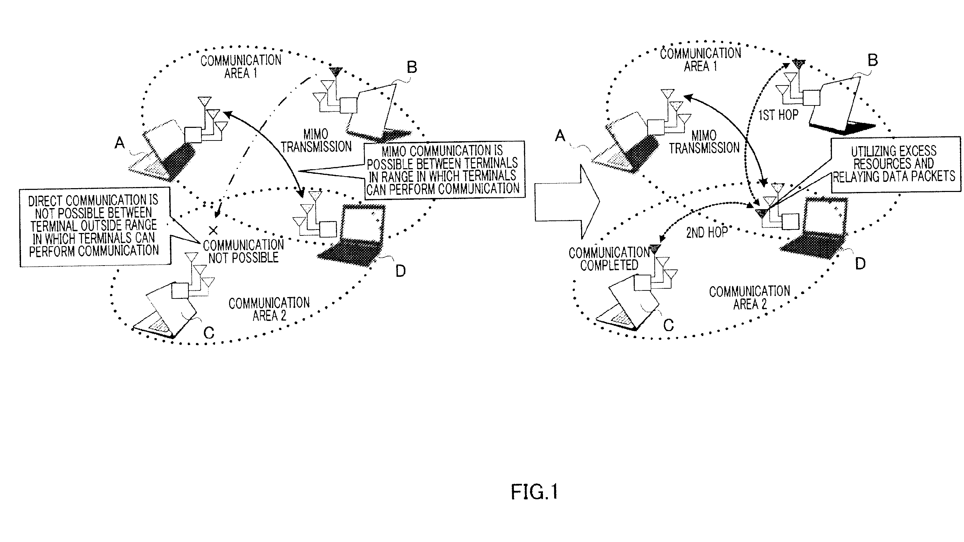

A case will be explained about communication in this wireless communication system as an example where there are terminals A to D having a plurality of antennas, with reference to FIG.1. In this figure, terminal A and terminal D are present in the same communication area, so that MIMO communication is possible, and, meanwhile, terminal B and terminal C are present in different areas, and therefore terminal B and terminal C cannot perform MIMO communication directly with each other. Accordingly, terminal D that is present in a range where terminal D can communicate with terminals B and C is requested to relay communication. Terminal D uses two antennas for MIMO communication, and therefore transmits to terminals B and C an accepting response in an event that it is possible to perform relaying using resources for the one remaining antenna. Then, packet in which the transmission source is terminal B and the transmission destination is terminal C, is transmitted via terminal D.
Patent Document 1: Japanese Patent Application Laid-Open No.2006-148388

### Disclosure of Invention

### Problems to be Solved by the Invention

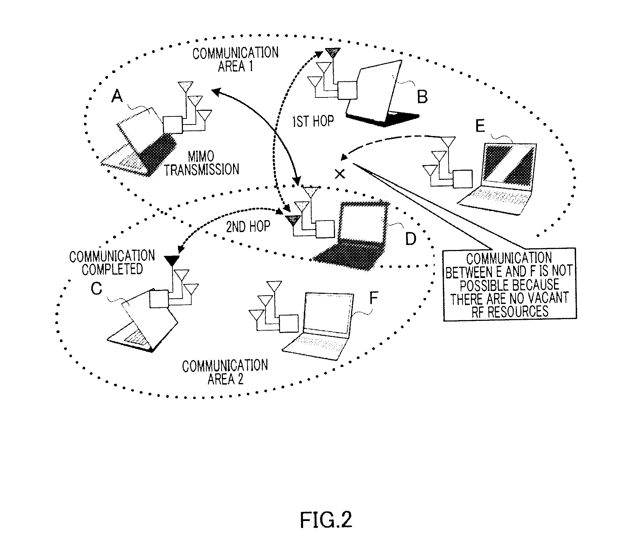

However, with the above-described conventional wireless communication system, communication is not allowed in the following cases. In the situation shown in FIG.2, when terminal E tries to communicate with terminal F via terminal D, terminal D that is present in a range where terminal D can communicate with terminals B and C, communicates with other terminals and does not have vacant RF resources, and therefore it is not possible to perform communication through terminal D. This may be caused in the same manner even when a terminal, which is a relay spot, is changed to a terminal other than terminal D. That is, with a conventional wireless terminal system, whether or not communication is possible is determined depending on the number of RF resources for a relay terminal and the use conditions of the resources.

It is therefore an object of the present invention to provide a relay system that can be configured flexibly, and provide a wireless communication system that has this relay system and allows more stable communication.

### Means for Solving the Problem

The relay system of the present invention provides a relay system configured with a group of wireless terminals each having an interface corresponding to a first wireless communication system and an interface corresponding to a second wireless communication system, and that relays data transmission between the first wireless communication system and the second wireless communication system, and adopts a configuration including: a relay master wireless terminal that transmits an invitation signal, selects a slave wireless terminal among transmission source wireless terminals transmitting a participation representing signal in response to the invitation signal and transmits a synchronization signal to the slave wireless terminal; and a relay slave wireless terminal that transmits the participation representing signal in response to the invitation signal and receives the synchronization signal, wherein the relay master wireless terminal and the relay slave wireless terminal transmit data transmitted from a transmission source communication apparatus of the first wireless communication system, to a transmission destination communication apparatus of the second wireless communication system at a transmission time synchronized to each other based on the synchronization signal.

The wireless communication system of the present invention adopts a configuration including: a wireless LAN terminal that allows multiple input multiple output communication; a base station apparatus in a mobile communication system providing a path to an Internet network, the base station apparatus dividing transmission data addressed to the wireless LAN terminal into a plurality of transmission data segments and, division multiplexing and transmitting the plurality of transmission data segments using a communication scheme of the mobile communication system; and a relay system that is configured with a group of wireless terminals, each wireless terminal having a communication interface of the mobile communication system and a communication interface of a wireless LAN and extracting a different transmission data segment from received data, and converting the extracted transmission data segment to a wireless LAN format and performing transmission synchronically to the wireless LAN terminal.

### Advantageous Effects of Invention

According to the present invention, it is possible to provide a relay system that can increase communication capacity flexibly in an arbitrary place and that is able to configure LAN access points, and provide a wireless communication system that has this relay system and allows more stable communication.

### Brief Description of Drawings

FIG.1 is an illustration to explain a conventional wireless communication system where a MIMO communication scheme is applied to an adhoc network;
FIG.2 is another illustration to explain a conventional wireless communication system where a MIMO communication scheme is applied to an adhoc network;
FIG.3 is a block diagram showing the configuration of a base station apparatus according to Embodiment 1 of the present invention;
FIG.4 is a block diagram showing the configuration of a mobile station (relay master terminal) according to Embodiment 1;
FIG.5 is a block diagram showing the configuration of a mobile station (relay slave terminal) according to Embodiment 1;
FIG.6 is a block diagram showing the configuration of a wireless LAN terminal according to Embodiment 1;
FIG.7 is an illustration to explain operations of a wireless communication system (downlink transmission) according to Embodiment 1;
FIG.8 is an illustration to explain operations of the wireless communication system (uplink transmission) according to Embodiment 1; and
FIG.9 is an illustration to explain operations of the wireless communication system (uplink transmission) according to Embodiment 2.

### Best Mode for Carrying Out the Invention

Now, embodiments of the present invention will be described in detail with reference to the accompanying drawings.

### (Embodiment 1)

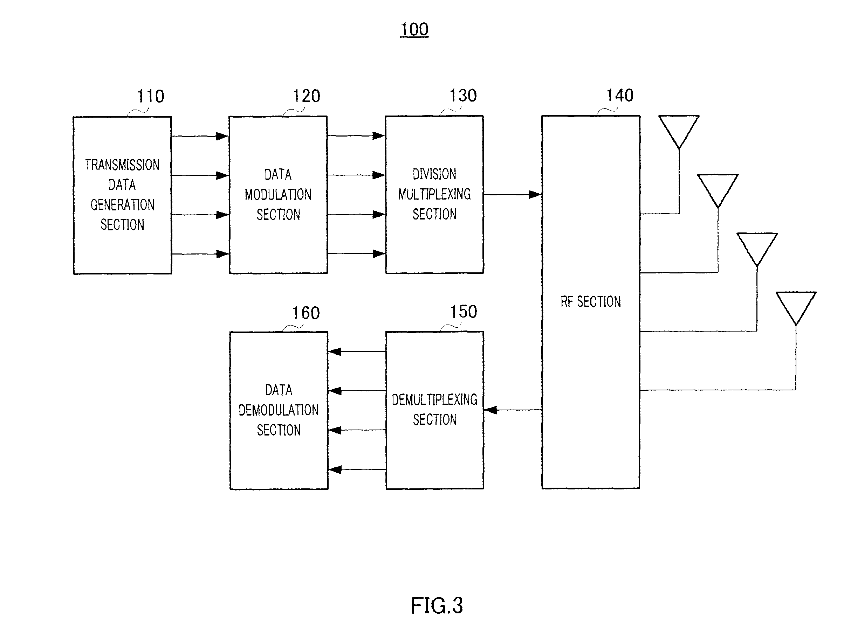

Base station apparatus 100 according to the present embodiment shown in FIG.3, communicates with mobile station 200 and mobile stations 300 (described later) using the first communication scheme. Although a case will be explained here where the WCDMA scheme defined in IMT-2000 is adopted as the first communication scheme, the present embodiment is not limited to this.

As shown in FIG.3, base station apparatus (BS) 100 according to the present embodiment has transmission data generation section 110, data modulation section 120, division multiplexing section 130, RF section 140, demultiplexing section 150 and data demodulation section 160.

Transmission data generation section 110 generates a transmission data sequence. Also, based on relay system information transmitted from mobile station 200 (described later), transmission data generation section 110 divides the transmission data sequence into the same number of transmission data sequence segments as the number of mobile stations selected as relay system information relaying stations. The resulting transmission data sequence segments are transmitted to data modulation section 120.

Data modulation section 120 modulates the transmission data sequence segments generated in transmission data generation section 110 using a predetermined modulation scheme (e.g. BPSK and QPSK).

Division multiplexing section 130 division-multiplexes the transmission data sequence segments according to a communication scheme designated in IMT (e.g. FDMA, TDMA and CDMA). That is, the transmission data sequence segments are relayed by different relay stations, and therefore, when a CDMA scheme is adopted, by spreading the transmission data sequence segments using varying spreading codes allocated to the relay stations, division multiplexing section 130 generates a multiplex signal.

RF section 140 performs predetermined radio processing for the multiplex signal generated in division multiplexing section 130 and transmits the resulting radio signal via antennas. Further, RF section 140 performs predetermined radio receiving processing for a radio signal transmitted from a relay station and transmits the resulting received signal to demultiplexing section 150.

The received signal acquired in RF section 140 is a multiplex signal (a signal acquired by division-multiplexing signals transmitted from relay stations), and therefore demultiplexing section 150 demultiplexes the received signal to signals per source relay station.

Data demodulation section 160 acquires received data by performing demodulation every demultiplex signal.

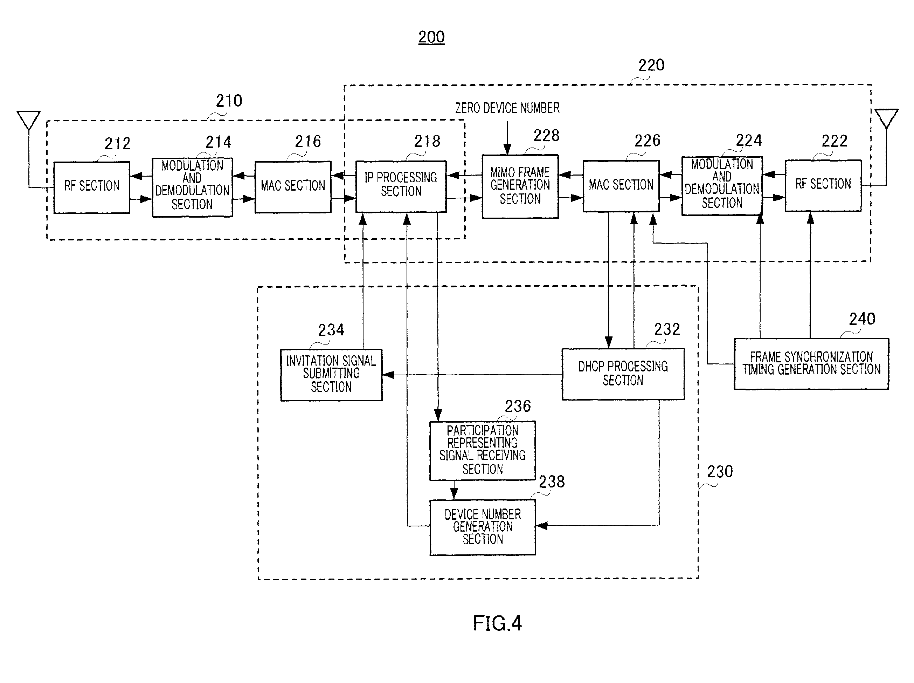

Mobile station (MS) 200 as a relay station according to the present embodiment shown in FIG.4, is configured to communicate using a second communication scheme besides the above first communication scheme. Here, a case will be explained where a wireless LAN scheme is adopted as the second communication scheme.

As shown in FIG.4, mobile station (MS) 200 has first communication processing section 210 for communicating with base station apparatus 100 using the WCDMA scheme, second communication processing section 220 for communicating with wireless LAN terminal 400 (described later) using a wireless LAN scheme, relay system configuration processing section 230 and frame synchronization timing generation section 240.

First communication processing section 210 performs radio receiving processing for a radio signal received via antenna (downlink radio signal transmitted from base station apparatus 100), and outputs the resulting received signal to second communication processing section 220. First communication processing section 210 performs predetermined radio transmitting processing for a transmission signal (uplink transmission signal), and transmits the resulting radio signal via antenna.

First communication processing section 210 has RF section 212, modulation and demodulation section 214, MAC section 216 and IP processing section 218 to perform radio transmitting and receiving processing between base station apparatus 100 using the WCDMA scheme.

Second communication processing section 220 performs radio receiving processing for the radio signal received via antenna (uplink radio signal transmitted from wireless LAN terminal 400 described later) at the time based on a frame synchronization timing signal, and outputs the resulting received signal to first communication processing section 210. Second communication processing section 220 outputs to relay system configuration processing section 230 participation representing signals (including IP addresses and the number of unused antennas of those mobile stations 300) transmitted from mobile stations 300 located near mobile station 200. Second communication processing section 220 performs predetermined radio transmitting processing for an IP address assignment control signal, an invitation signal and device number reporting signal received from relay system configuration processing section 230 and the frame synchronization timing signal at the time based on a frame synchronization timing signal, and transmits the resulting radio signal via antenna.

Second communication processing section 220 converts the downlink received signal received from first communication processing section 210 to a MIMO communication frame. Second communication processing section 220 adds to a MIMO communication frame a pilot signal according to the device number of mobile station 200 (here, zero). Second communication processing section 220 performs predetermined radio transmitting processing for the resulting frame at the time based on the frame synchronization timing signal, and transmits the resulting radio signal via antenna.

Second communication processing section 220 has RF section 222, modulation and demodulation section 224, MAC section 226 and MIMO frame generation section 228 to perform radio transmitting and receiving processing between second communication processing section 220 and wireless LAN terminal 400 using a wireless LAN scheme. IP processing section 218 functions as part of second communication processing section 220. Upon uplink communication, MIMO frame generation section 228 does not perform processing specifically.

Relay system configuration processing section 230 generates an IP address assignment control signal, and transmits this IP address assignment control signal using a wireless LAN communication scheme. The IP address assignment control signal includes an ESS ID (Extended Service Set Identifier) allocated to mobile station 200, the IP address of mobile station 200 and a broadcast value in the MAC address. By transmitting this IP address assignment control signal, relay system configuration processing section 230 is able to receive IP assignment request signals, which are response signals including BSS IDs (Basic Service Set Identifiers), from mobile stations 300 to which the same ESS ID is allocated by the wireless LAN.

Relay system configuration processing section 230 allocates IP addresses to mobile stations 300 having transmitted the IP assignment request signal, and generates IP reporting signals including the BSS IDs of those mobile stations 300 and the allocated IP addresses. Relay system configuration processing section 230 transmits the generated IP reporting signals using a wireless LAN communication scheme. This transmission of IP reporting signals allows mobile station 200 and mobile stations 300 to communicate using the IP addresses from this time.

Relay system configuration processing section 230 transmits an invitation signal to all mobile stations 300 to which IP addresses are allocated (i.e. all mobile stations 300 having transmitted IP reporting signals), and receives the participation representing signals in response to that invitation signal. The invitation signal includes the IP address of mobile station 300 as a destination address and the IP address of mobile station 200 as a transmission source address.

Based on the participation representing signals, relay system configuration processing section 230 determines slave terminals configuring a relay system where mobile station 200 functions as a master terminal. Relay system configuration processing section 230 sets the device number of mobile station 200 to zero, and assigns consecutive device numbers to slave terminals in order participation representing signals are received. Relay system configuration processing section 230 transmits, to each slave terminal, a device number reporting signal including the device numbers and the number of all mobile stations configuring the relay system (i.e. including the number of mobile station 200 and all the slave terminals).

Relay system configuration processing section 230 transmits, to base station apparatus 100, relay system information related to mobile station 200 and the slave terminals configuring the relay system via first communication processing section 210.

To be more specific, relay system configuration processing section 230 has DHCP (Dynamic Host Configuration Protocol) processing section 232, invitation signal submitting section 234, participation representing signal receiving section 236 and device number generation section 238.

DHCP processing section 232 generates an IP address assignment control signal, and transmits this IP address assignment control signal using a wireless LAN communication scheme. DHCP processing section 232 allocates IP addresses to mobile stations 300 having transmitted the IP assignment request signal, and generates IP reporting signals including the BSS IDs of those mobile stations 300 and the allocated IP addresses.

Invitation signal submitting section 234 transmits an invitation signal to all mobile stations 300 to which the IP addresses are allocated via second communication processing section 220.

Participation representing signal receiving section 236 receives the participation representing signals transmitted from mobile stations 300 as responses to the invitation signal via second communication processing section 220.

Device number generation section 238 receives a plurality of participation representing signals from participation representing signal receiving section 236, determines slave terminals configuring the relay system among a plurality of mobile stations 300 corresponding to a plurality of participation representing signals and assigns a device number to each slave terminal. Device number generation section 238 transmits a device number reporting signal to each slave terminal via second communication processing section 220.

Frame synchronization timing generation section 240 generates a frame synchronization timing signal, and outputs the generated frame synchronization timing signal to second communication processing section 220.

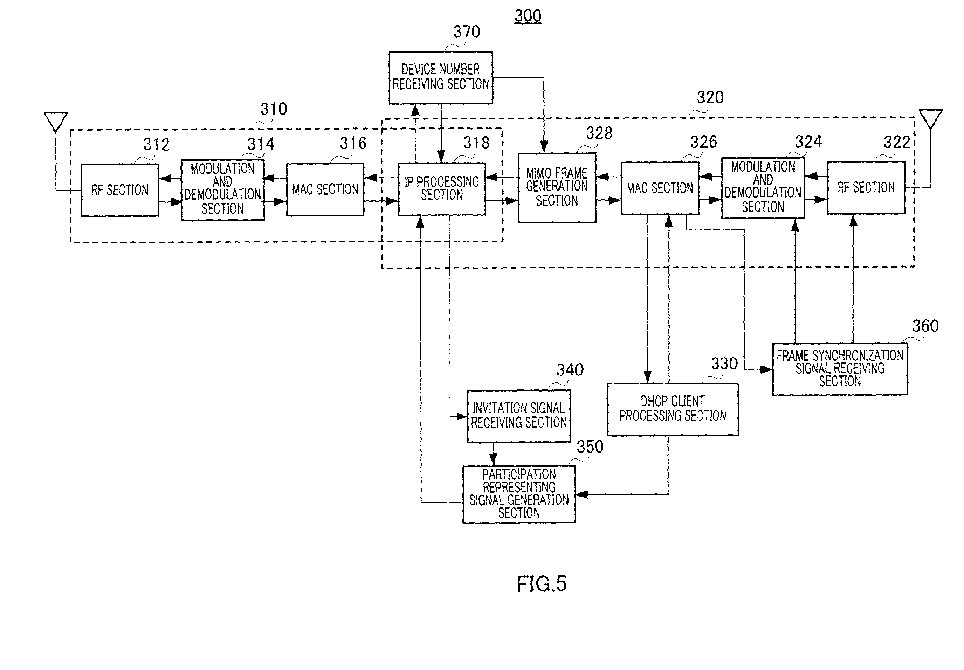

Mobile station (MS) 300 as a relay station according to the present embodiment shown in FIG.5, is configured to communicate using the first communication scheme and a second communication scheme as in mobile station 200.

As shown in FIG.5, mobile station (MS) 300 has first communication processing section 310 for communicating with base station apparatus 100 using the WCDMA scheme, second communication processing section 320 for communicating with wireless LAN terminal 400 (described later) using a wireless LAN scheme, DHCP (Dynamic Host Configuration Protocol) client processing section 330, invitation signal receiving section 340, participation representing signal generation section 350, frame synchronization signal receiving section 360 and device number receiving section 370.

First communication processing section 310 performs radio receiving processing for the radio signal received via antenna (downlink radio signal transmitted from base station apparatus 100), and outputs the resulting received signal to second communication processing section 320. First communication processing section 310 performs predetermined radio transmitting processing for a transmission signal (uplink transmission signal), and transmits the resulting radio signal via antenna.

First communication processing section 310 has RF section 312, modulation and demodulation section 314, MAC section 316 and IP processing section 318 that perform radio transmitting and receiving processing between base station apparatus 100 using the WCDMA scheme.

Second communication processing section 320 receives an IP address assignment control signal transmitted from mobile station 200, and outputs the resulting signal to DHCP client processing section 330. Second communication processing section 320 transmits an IP assignment request signal received from DHCP client processing section 330 to mobile station 200.

Second communication processing section 320 receives an IP reporting signal transmitted from mobile station 200, and outputs the resulting signal to DHCP client processing section 330.

Second communication processing section 320 receives an invitation signal transmitted from mobile station 200, and outputs the received invitation signal to invitation signal receiving section 340. Second communication processing section 320 receives a participation representing signal generated in participation representing signal generation section 350, and outputs the received participation representing signal to mobile station 200. Second communication processing section 320 receives a device number reporting signal transmitted from mobile station 200, and outputs the received device number reporting signal to device number receiving section 370.

Second communication processing section 320 receives a frame synchronization timing signal transmitted from mobile station 200, and outputs the received frame synchronization timing signal to frame synchronization signal receiving section 360.

Second communication processing section 320 performs radio receiving processing for the radio signal received via antenna (uplink radio signal transmitted from wireless LAN terminal 400 described later) at the time based on a timing signal. Second communication processing section 320 then performs IP processing (including replacing an IP packet transmission source address with an IP address allocated from mobile station 200) for a specific packet in the resulting received packets, and then transfers that packet to first communication processing section 310. Here, the specific packet is selected as follows. Modulo calculation (residual calculation) is conducted between packet numbers and the number of mobile stations included in the device number reporting signal, and an IP packet in which the solution matches the device number of mobile station 300 itself, is selected.

Second communication processing section 320 converts the downlink received signal received from first communication processing section 310 to a MIMO communication frame. Second communication processing section 320 adds, to a MIMO communication frame, a pilot signal according to the device number received from device number receiving section 370 (i.e. pilot signal sequence varies per device number). Second communication processing section 320 performs predetermined radio transmitting processing for the resulting frame at the time based on the frame synchronization timing signal, and transmits the resulting radio signal via antenna.

Second communication processing section 320 has RF section 322, modulation and demodulation section 324, MAC section 326 and MIMO frame generation section 328 to perform radio transmitting and receiving processing between second communication processing section 320 and wireless LAN terminal 400 using a wireless LAN scheme. IP processing section 318 functions as part of second communication processing section 320. Upon uplink communication, MIMO frame generation section 328 does not perform processing specifically.

Invitation signal receiving section 340 receives the invitation signal from second communication processing section 320, and outputs the received invitation signal to participation representing signal generation section 350.

Upon receiving the invitation signal, participation representing signal generation section 350 generates a participation representing signal, and outputs the generated participation representing signal to mobile station 200 via second communication processing section 320.

Frame synchronization signal receiving section 360 receives the frame synchronization timing signal, and outputs a timing signal corresponding to this signal to second communication processing section 320.

Device number receiving section 370 receives the device number reporting signal, and outputs device numbers and the number of mobile stations included in the device number reporting signal, to second communication processing section 320.

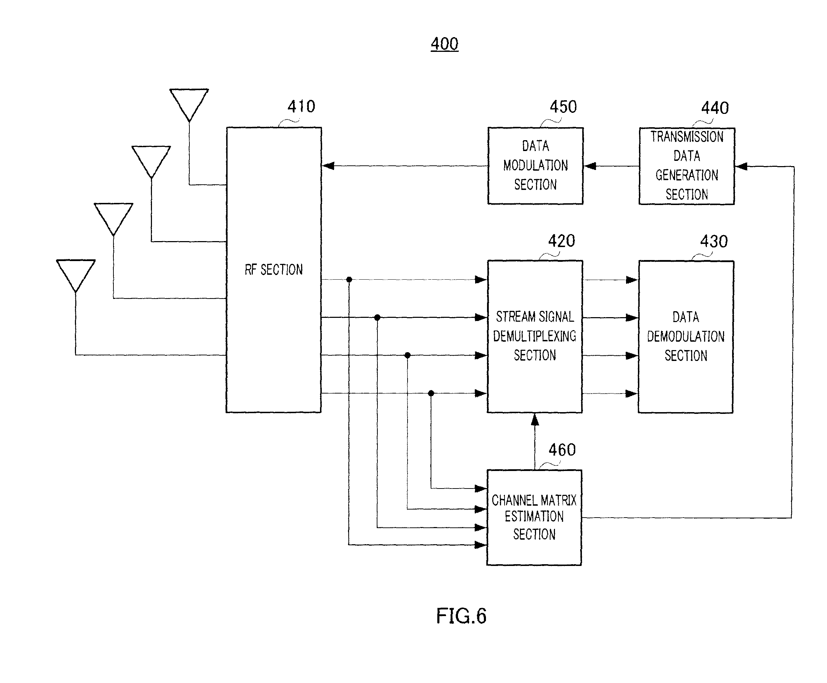

As shown in FIG.6, wireless LAN terminal 400 according to the present embodiment has RF section 410, stream signal demultiplexing section 420, data demodulation section 430, transmission data generation section 440, data modulation section 450 and channel matrix estimation section 460.

RF section 410 performs radio receiving processing for a downlink received signal received via antenna, and outputs the resulting received signal to stream signal demultiplexing section 420 and channel matrix estimation section 460.

Channel matrix estimation section 460 estimates a channel based on a pilot signal (orthogonal code) transmitted from a mobile station configuring the above relay system, outputs the resulting channel estimation matrix to stream signal demultiplexing section 420 and transmits the resulting signal via transmission data generation section 440, data modulation section 450 and RF section 410.

Stream signal demultiplexing section 420 demultiplexes the signal transmitted using MIMO by the relay system, using the channel estimation matrix acquired in channel matrix estimation section 460. The demultiplex signals correspond to transmission data sequence segments formed in base station apparatus 100, and are outputted to data demodulation section 430.

Data demodulation section 430 demodulates the demultiplex signals received from stream signal demultiplexing section 420, to acquire a plurality of data sequences, and connects a plurality of these data sequences (i.e. the opposite processing of the division processing in transmission data generation section 110), to acquire a data sequence.

Transmission data generation section 440 generates an uplink transmission data sequence, and outputs the generated uplink transmission data sequence to data modulation section 450.

Data modulation section 450 modulates the uplink transmission data sequence, and outputs the resulting data sequence to RF section 410.

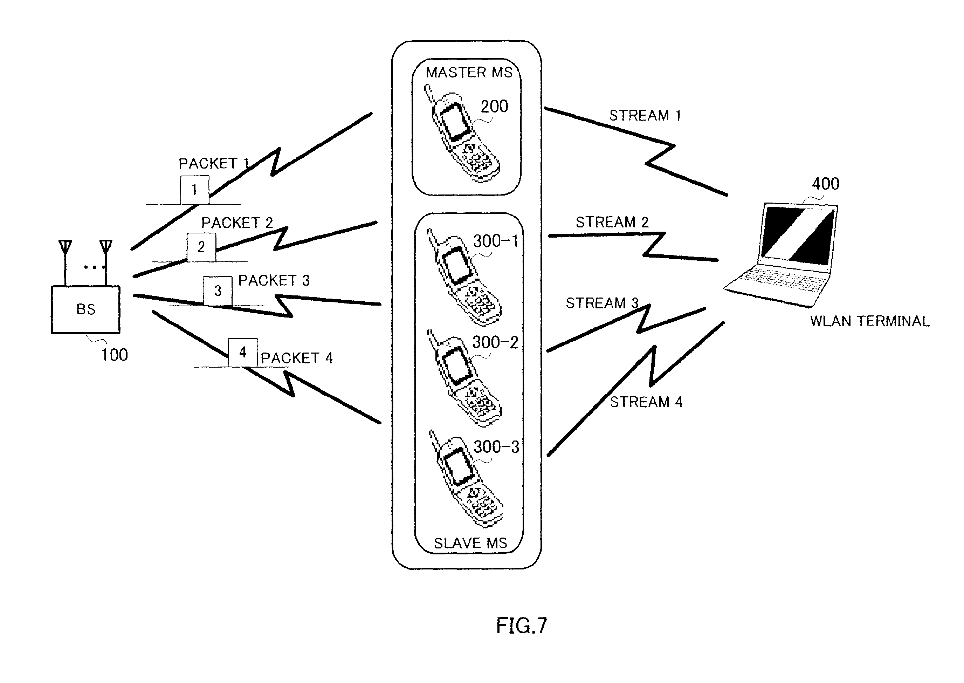

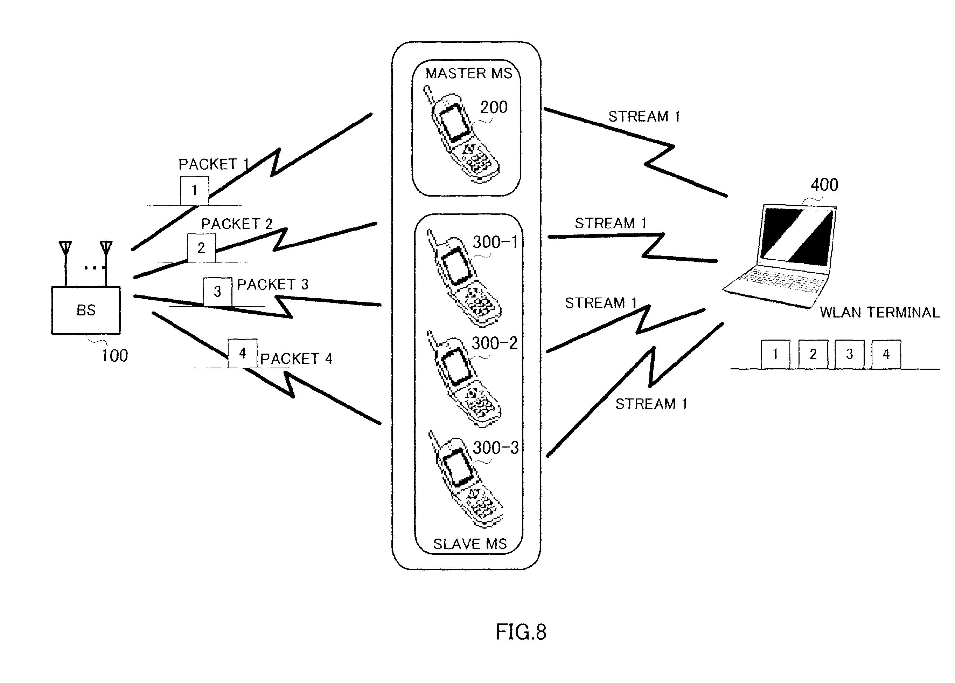

Operations of the wireless communication system configured with base station apparatus 100, mobile stations 200 and 300, and wireless LAN terminal 400 as above, will be explained with reference to FIGs.7 and 8. Here, a case will be explained where the number of mobile stations forming the relay system is four.

### [Processing before configuring the relay system]

Mobile station 200 as a master terminal assigns IP addresses to mobile stations 300 having the same ESS ID using wireless LAN communication.

That is, mobile station 200 transmits an IP address assignment control signal, and assigns IP addresses to mobile stations 300 transmitting IP assignment request signals in response to this IP address assignment control signal. The assigned IP addresses are reported to mobile station 300 by an IP reporting signal.

In this way, mobile station 200 and mobile stations 300 have their IP addresses each other, and, after this, can communicate with each other using the IP addresses.

### [Relay system configuring processing]

Mobile station 200 as a master terminal transmits an invitation signal to all mobile stations 300 to which the IP addresses are allocated. Mobile station 200 then receives the participation representing signals transmitted by mobile stations 300-1 to 300-3. The transmission source mobile stations of the participation representing signals received in mobile station 200 are the slave terminal candidates (here, mobile stations 300-1 to 300-3) configuring the relay system together with mobile station 200.

Here, mobile stations 300 transmit the participation representing signals to mobile station 200 via wireless LAN channels. For example, the participation representing signals are transmitted using a CSCD (Carrier Sense Collision Detection) scheme. Usually, invitation signals are received from mobile station 300 located the closest to mobile station 200 in order, so that the participation representing signals are transmitted in this order. Accordingly, the device numbers are usually assigned in this order.

Mobile station 200 then determines slave terminals (here, mobile stations 300-1 to 300-3) out of the slave terminal candidates, and transmits information related to mobile station 200 and the slave terminals, that is, relay system information, to base station apparatus 100. In this way, the relay system can be flexibly configured from a plurality of mobile stations, so that it is possible to realize a wireless communication system that allows more stable communication than a conventional system selecting only one mobile station as a relay station.

Further, mobile station 200 transmits a frame synchronization timing signal to the slave terminals (here, mobile stations 300-1 to 300-3). Mobile stations 300 as the slave terminals transmit signals at the time matching the transmission time of mobile station 200, so that it is possible to perform downlink MIMO transmission by all the master terminal and the slave terminals.

### [Downlink radio communication processing]

Base station apparatus 100 forms the same number of transmission data sequence segments as the number of mobile stations configuring the relay system, from one transmission data sequence, and multiplexes parallel modulated signals formed from the transmission data sequence segments. Parallel modulated signals are shown as packets 1 to 4 in FIG.7. The parallel modulated signals are relayed by different mobile stations (here, mobile station 200 and mobile stations 300-1 to 300-3), and transmitted to wireless LAN terminal 400. Accordingly, base station apparatus 100 division-multiplexes (TDMA, FDMA, CDMA and so on) a plurality of parallel modulated signals such that the mobile stations can extract corresponding modulated signals. Further, the communication between base station apparatus 100 and the relay system adopts a communication scheme different from the communication scheme between the relay system and wireless LAN terminal 400.

In the relay system, mobile station 200 and mobile station 300-1 to 300-3 perform receiving processing for desired packets and convert the resulting desired packets to MIMO communication frames. Then, mobile station 200 and mobile stations 300-1 to 300-3 transmit MIMO communication frames at the time synchronized to each other. Downlink MIMO transmission by the relay system is performed in this way.

Wireless LAN terminal 400 demultiplexes the signal subjected to downlink MIMO transmission from the relay system, and then performing demodulation processing and connecting processing, to acquire received data.

In this way, it is possible to configure relay access points for MIMO transmission in a plurality of mobile stations, and increase downlink communication speed. Generally, with MIMO communication, higher throughput is expected when the correlation of power fluctuation between transmission antennas is lower. According to the present embodiment, antennas for MIMO transmission are basically provided in different mobile stations, so that the distances between the antennas are expected to be longer enough than the wavelength of carriers used for communication. Consequently, the correlation of power fluctuation between transmission antennas becomes lower, so that it is possible to realize MIMO communication effectively.

### [Uplink radio communication processing]

As shown in FIG.8, wireless LAN terminal 400 transmits uplink transmission data (in the figure, stream 1 formed with packets 1 to 4) to mobile station 200 and all mobile stations 300-1 to 300-3 configuring a relay system (i.e. SISO transmission).

Mobile station 200 and mobile stations 300-1 to 300-3 extract different packets, and transmit the extract packets at the time based on a synchronization signal, that is, synchronically transmit the extracted packets. Here, as described above, the extract packets are selected by conducting modulo calculation (residual calculation) between packet numbers and the number of mobile stations included in the device number reporting signal, and an IP packet in which the solution matches the device number of mobile station 300 itself, is selected.

When an FDMA scheme is adopted between mobile stations 200, and mobile stations 300-1 to 300-3 and base station apparatus 100, mobile station 200 and mobile stations 300-1 to 300-3 transmit packets in different frequencies to base station apparatus 100. Further, when a CDMA scheme is adopted, mobile station 200 and mobile stations 300-1 to 300-3 spread packets with different spreading codes, and then transmit the resulting packets to base station apparatus 100.

Incidentally, on a wireless communication characteristics, an IP packet is likely to being partly missing or overlap. Further, an IP packet is also likely to being partly missing or overlap because, for example, an IP packet number cannot be checked with a device number. This case depends on communication protocol functions such as UDP and TCP. By this communication protocol function, in many cases, retransmission processing is performed for missing packets, and truncation is performed for overlapping packets, and therefore the above-described relay functions will be maintained.

Generally, communication throughput in a wireless LAN environment is higher than in a mobile communication network, so that higher and more stable communication is possible by distributing traffic to a plurality of mobile communication terminals.

In this way, according to the present embodiment, mobile station (200) as a master terminal configuring a relay system transmits a synchronization signal, mobile stations (300) as slave terminals receive the synchronization signal, and mobile station (200) and mobile stations (300) transmit data transmitted from base station apparatus (100) to wireless LAN terminal (400) at the transmission time synchronized to each other based on the synchronization signal. By this means, a relay system can be flexibly configured by a plurality of mobile stations, so that it is more likely to prevent situations in which communication cannot be engaged due to the number of RF resources of a relay terminal and the use conditions of RF resources and which are caused in conventional wireless communication systems. Consequently, by providing this relay system, a wireless communication system allowing more stable communication is realized.

### (Embodiment 2)

With the present embodiment, all mobile stations configuring a relay system synchronize streams transmitted from a wireless LAN terminal with a base station apparatus and transfer the streams as is to the base station apparatus, and the base station apparatus performs maximum ratio combining on the received streams.

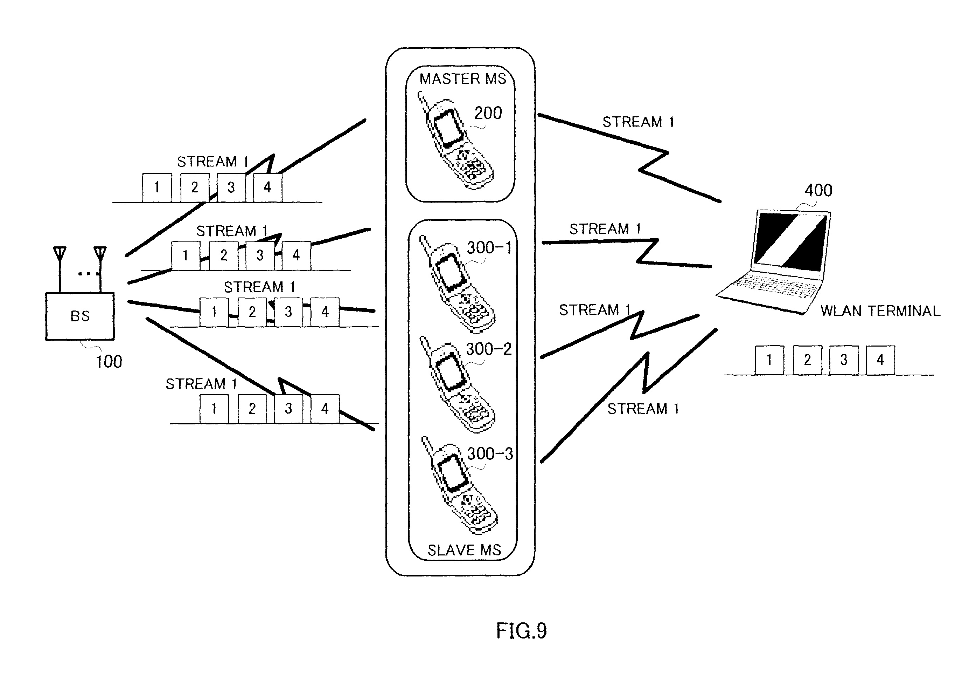

As shown in FIG.9, wireless LAN terminal 400 transmits uplink transmission data (in the figure, stream 1 formed with packets 1 to 4) to all mobile station 200 and mobile stations 300-1 to 300-3 configuring a relay system (i.e. SISO transmission).

Mobile station 200 and mobile stations 300-1 to 300-3 transmit the received streams at the time based on a synchronization signal, that is, synchronically transmit the received streams. When a CDMA scheme is adopted, mobile station 200 and mobile stations 300-1 to 300-3 spread packets with different spreading codes, and then transmit the resulting packets to base station apparatus 100.

Base station apparatus 100 performs demodulation and then performs maximum ratio combining for the received streams. Base station apparatus 100 performs maximum ratio combining in this way, so that it is possible to increase the signal-to-noise ratio (SNR).

### (Embodiment 3)

With the present embodiment, all mobile stations configuring a relay system asynchronously transfer streams transmitted from a wireless LAN terminal as is, and a base station apparatus selects the stream of the best quality among the received streams. The selected received stream is transferred to an upper layer in the communication scheme used between base station apparatus 100, and mobile station 200 and mobile stations 300, and the other received streams are discarded.

As shown in FIG.9, wireless LAN terminal 400 transmits uplink transmission data (in the figure, stream 1 formed with packets 1 to 4) to mobile station 200 and all mobile stations 300-1 to 300-3 configuring a relay system (i.e. SISO transmission).

Mobile station 200 and all mobile stations 300-1 to 300-3 asynchronously transmit the received stream. When an FDMA scheme is adopted between mobile stations 200, mobile stations 300-1 to 300-3 and base station apparatus 100, mobile station 200 and mobile stations 300-1 to 300-3 transmit packets in different frequencies to base station apparatus 100. Further, when a CDMA scheme is adopted, mobile station 200 and mobile stations 300-1 to 300-3 spread packets with different spreading codes, and then transmit the resulting packets to base station apparatus 100.

Base station apparatus 100 selects a stream of the best quality among the received streams, and uses the selected received stream preferentially in an upper layer.

### Industrial Applicability

The relay system and the wireless communication system of the present invention are suitable for use to allow more stable communication.

## Claims

1. A wireless communication system comprising:
a wireless LAN (Local Area Network) terminal that allows multiple input multiple output communication;
a base station apparatus in a mobile communication system providing a path to an Internet network, the base station apparatus dividing transmission data addressed to the wireless LAN terminal into a plurality of transmission data segments and, division multiplexing and transmitting the plurality of transmission data segments using a communication scheme of the mobile communication system; and
a relay system that is configured with a group of wireless terminals, each wireless terminal having a communication interface of the mobile communication system and a communication interface of a wireless LAN and extracting a different transmission data segment from received data, and converting the extracted transmission data segment to a wireless LAN format and performing transmission synchronically to the wireless LAN terminal.

2. The wireless communication system according to claim 1, wherein the relay system is configured with one relay master wireless terminal and relay slave wireless terminals other than the relay master wireless terminal, and the relay master wireless terminal and the relay slave wireless terminals match a transmission time by transmitting a synchronization signal from the relay master wireless terminal to the relay slave wireless terminals.

3. A relay system that is configured with a group of wireless terminals each having an interface corresponding to a first wireless communication system and an interface corresponding to a second wireless communication system, and that relays data transmission between the first wireless communication system and the second wireless communication system, the relay system comprising:
a relay master wireless terminal that transmits an invitation signal, selects a slave wireless terminal among transmission source wireless terminals transmitting a participation representing signal in response to the invitation signal and transmits a synchronization signal to the slave wireless terminal; and
a relay slave wireless terminal that transmits the participation representing signal in response to the invitation signal and receives the synchronization signal,
wherein the relay master wireless terminal and the relay slave wireless terminal transmit data transmitted from a transmission source communication apparatus of the first wireless communication system, to a transmission destination communication apparatus of the second wireless communication system at a transmission time synchronized to each other based on the synchronization signal.
